(19) **Europäisches Patentamt / European Patent Office / Office européen des brevets**

(11) **EP 2 326 031 B1**

(12) **EUROPEAN PATENT SPECIFICATION**

(45) Date of publication and mention
of the grant of the patent:
**02.05.2012 Bulletin 2012/18**

(51) Int Cl.:
***H04B 7/155*** (2006.01)

(21) Application number: **09176622.0**

(22) Date of filing: **20.11.2009**

(54) **Method for transferring by a relay at least one signal composed of complex symbols**

Verfahren zur Übertragung über ein Wiederholer von mindestens einem aus komplexen Symbolen bestehendes Signal

Procédé de transfert par un relais d'au moins un signal composé de symboles complexes

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**25.05.2011 Bulletin 2011/21**

(73) Proprietors:
• **Mitsubishi Electric R&D Centre Europe B.V.**
**1119 NS Schiphol Rijk (NL)**
Designated Contracting States:
**FR**
• **Mitsubishi Electric Corporation**
**Chiyoda-ku**
**Tokyo 100-8310 (JP)**
Designated Contracting States:
**AT BE BG CH CY CZ DE DK EE ES FI GB GR HR HU IE IS IT LI LT LU LV MC MK MT NL NO PL PT RO SE SI SK SM TR**

(72) Inventors:
• **Gresset, Nicolas**
**35708 Rennes Cedex 7 (FR)**
• **Plainchault, Mélanie**
**35708 Rennes Cedex 7 (FR)**
• **Rekaya-Ben Othman, Ghaya**
**35708 Rennes Cedex 7 (FR)**

(74) Representative: **Maillet, Alain et al**
**Cabinet Le Guen Maillet**
**5, place Newquay**
**B.P. 70250**
**35802 Dinard Cedex (FR)**

(56) References cited:
**US-A1- 2006 239 222    US-A1- 2007 060 047**
**US-A1- 2008 166 975    US-A1- 2009 092 073**

## Description

The present invention relates generally to a method and a device for relaying symbols transferred by a source to a destination in a wireless cellular telecommunication network.

Future wireless cellular telecommunication networks will use higher frequency bands than the ones used by current wireless cellular telecommunication networks.

These cellular telecommunication networks, particularly in urban environment, will have dead zones, wherein the signals transferred between base stations and terminals will be highly attenuated.

The access to the wireless cellular telecommunication network might not be possible for a mobile terminal located in a dead zone, if the signals radiated by the base stations are too attenuated.

Solutions are proposed today. Particular wireless telecommunication devices, like relays intend to reduce dead zones.

The patent application US 2006/0239222 discloses a method of providing cooperative diversity in a MIMO wireless network.

The present invention aims at enhancing the signals received by the destination by using a relay.

Furthermore, the present invention aims at increasing the diversity of symbols transferred to the destination.

To that end, the present invention concerns a method for transferring, by a relay, at least one signal composed of complex symbols obtained from information bits retrieved from at least one source signal transferred by at least a source to a destination in a wireless cellular telecommunication network, the source signal being composed of complex symbols obtained from said information bits, characterised in that the method comprises the steps executed by the relay of :

- receiving at least one source signal transferred by at least the source,
- successfully decoding the information bits from the at least one received signal,
- obtaining one signal among plural signals composed of complex symbols which can be obtained from the information bits,
- transferring the part of the obtained signal composed of complex symbols which can be obtained from the information bits, which should be transferred from the time (T1) of the successful decoding of the information bits, the complex symbols of the part of the obtained signal corresponding to redundancy generated by a rate matching algorithm.

The present invention concerns also a relay which is able to transfer at least one signal composed of complex symbols obtained from information bits retrieved from at least one source signal transferred by at least a source to a destination in a wireless cellular telecommunication network, the source signal being composed of complex symbols obtained from said information bits, characterised in that the relay comprises:

- means for receiving at least one source signal transferred by at least the source,
- means for successfully decoding the information bits from the at least one received signal,
- means for obtaining one signal among plural signals composed of complex symbols which can be obtained from the information bits,
- means for transferring the part of the obtained signal composed of complex symbols which can be obtained from the information bits, which should be transferred from the time (T1) of the successful decoding of the information bits, the complex symbols of the part of the obtained signal corresponding to redundancy generated by a rate matching algorithm.

Thus, the relay adapts its transmission dynamically when it can correctly decode the information bits. The relay only transmits signals that can help the destination to retrieve information bits. The use of the relay is efficient and does not generate too much interference on neighbouring communications.

According to a particular feature, the source transfers through each antenna of the source one source signal composed of complex symbols obtained from said information bits, each source signal transferred through an antenna of the source being different from each source signal transferred through another antenna of the source.

According to a particular feature, the relay obtains one signal among plural signals composed of complex symbols which can be obtained from the information bits for each of the antennas of the relay, each obtained signal transferred through an antenna of the relay being different from each obtained signal transferred through another antenna of the relay.

Thus, the destination observes different signals corresponding to the same information bits, which improves the system performance.

According to a particular feature, one obtained signal is obtained by :

- identifying one signal among plural signals composed of complex symbols which can be obtained from the information bits,
- deriving from the decoded information bits, a part of the identified signal that should be transferred from the successful decoding of the information bits.

Thus, the relay can derive by itself the signal to be transmitted, i.e. there is no extra data sent from the source to the relay, which reduces the overhead.

According to a particular feature, the identified signal is selected randomly from the plurality of signals composed of complex symbols which can be obtained from the information bits.

Thus, each relay can select the signal to be transmitted by itself, i.e. there is no control signalling sent to the relays, which reduces the overhead and make the system very flexible.

According to a particular feature, the identified signal is identified by reading at least one information stored into a memory.

Thus, the relay knows which signal has to be transmitted without receiving control signalling and the destination can always receive different signals which improve the reception performance.

According to a particular feature, the identified signals are identified by :

- measuring the reception power of pilot symbols associated to each possible signals among the plural signals,
- identifying at least one signal for which the associated pilot symbol reception power is one of the lowest.

Thus, the relay determines which signal has to be transmitted without receiving control signalling or without any initialization phase. Furthermore, a destination observes a large number of different signals, which improves the performance. Finally, the system is auto-adaptive, whatever the order of correct decoding of the information bits of the relays.

According to a particular feature, a distributed Spatial Division Multiplexing transmission scheme is used in the wireless cellular telecommunication network.

Thus, the relay transmits at least one signal corresponding to at least one antenna of a typical MIMO (Multiple Input Multiple Output) scheme.

The system performance is improved.

According to a particular feature, a space-time block code is used in the wireless cellular telecommunication network.

Thus, the MIMO scheme transmitted by the antennas of the source and relays has a low-complexity decoding and the performance is improved.

According to still another aspect, the present invention concerns a computer program which can be directly loadable into a programmable device, comprising instructions or portions of code for implementing the steps of the method according to the invention, when said computer program is executed on a programmable device.

Since the features and advantages relating to the computer program are the same as those set out above related to the method and device according to the invention, they will not be repeated here.

The characteristics of the invention will emerge more clearly from a reading of the following description of an example embodiment, the said description being produced with reference to the accompanying drawings, among which :

Fig. 1 represents the architecture of a wireless cellular telecommunication network in which the present invention is implemented;

Fig. 2 is a diagram representing the architecture of a relay in which the present invention is implemented ;

Fig. 3 is a diagram representing the architecture of a relay management entity in which the present invention is implemented ;

Fig. 4 discloses an example of an algorithm executed by the relay according to a first mode of realisation of the present invention;

Fig. 5 discloses an example of an algorithm executed by the relay according to a second mode of realisation of the present invention;

Fig. 6 discloses an example of signals transferred between a source and a destination according to the present invention;

Fig. 7 discloses an example of an algorithm executed by the relay according to a third mode of realisation of the present invention;

Fig. 8 discloses an example of an algorithm executed by a relay management entity according to the third mode of realisation of the present invention.

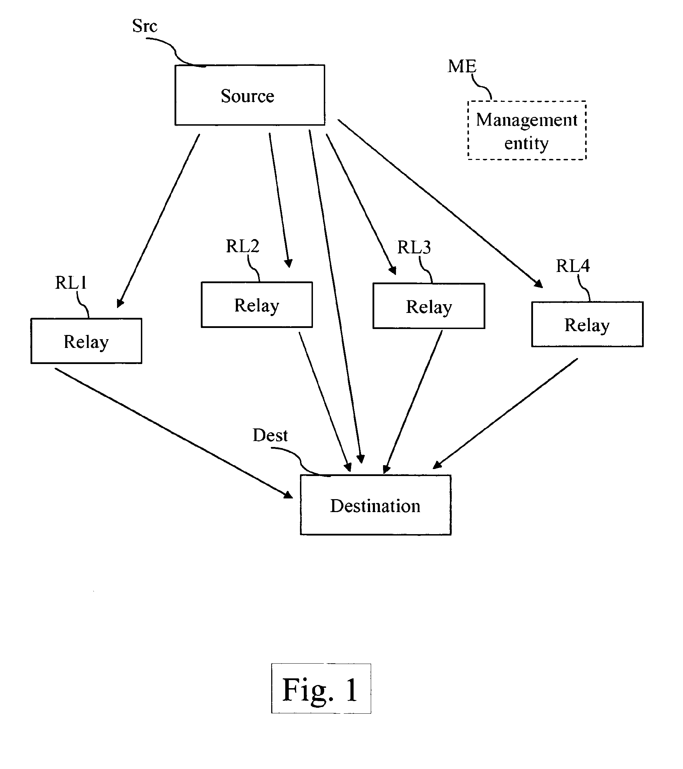

**Fig. 1** represents the architecture of a wireless cellular telecommunication network in which the present invention is implemented.

In the wireless cellular telecommunication network, a source Src transfers signals to at least one destination Dest.

The source Src may be a base station which transfers signals to at least one destination like a mobile terminal or to a home base station.

The source Src may be a mobile terminal or a home base station which transfers signals to at least one destination like a base station.

The base station is also named an access node or a node B or an enhanced node B.

The base station or the home base station may handle at least one mobile terminal.

A base station or a home base station handles a mobile terminal when the base station or the home base station has the information necessary for enabling the mobile terminal to establish a communication with a remote device through the base station or the home base station.

The base station or the home base station transfers signals to the mobile terminal through a downlink channel and receives signals transferred by the mobile terminal through an uplink channel.

The source Src may be a broadcasting device like, for example, a satellite. In that example, there is no uplink channel between the destination Dest and the source Src of the broadcast service.

The relays RL1 to RL4 operate according to a Dynamic Decode and Forward (DDF) protocol.

DDF protocol includes a smart processing at the relay RL. The relay RL receives and tries to decode the information transmitted from the source Src to the destination Dest and shifts to a transmission phase after that the decoding leads to no error.

In a particular mode of realisation of the present invention, the relay RL monitors the acknowledgments and non acknowledgments transferred by the destination Dest to the source Src.

When the relay RL receives and successfully decodes information bits, the relay RL transfers signals only when a non acknowledgment is detected. When an acknowledgment is detected, no more signal is transferred by the source Src and by the relay RL for the information bits transmission.

In a particular mode of realisation, when the relay RL is in transmission mode, the relay transfers signals on the same frequency/time resource as the source Src.

Four relays RL1 to RL4 are shown but we can understand that the present invention works when a different, e.g., more important, number of relays exist in the wireless cellular telecommunication network.

If a distributed Spatial Division Multiplexing (SDM) transmission scheme is used in the wireless cellular telecommunication network, the source Src transfers one signal through each of its antennas, the relay RL receives and tries to decode information bits transmitted by the source Src to the destination Dest.

According to a particular mode of realisation of the present invention, the source Src transfers one signal through each of its antennas, the signal being different from the other signals transferred through the other antennas.

The source Src transmits K information bits of an information word. Information bits are converted into coded bits by means of an encoder which may be followed by an interleaver in order to form a vector of coded bits.

The coded bits are separated into T different sub vectors of coded bits. Each sub vector of coded bits comprises redundancy generated by a rate matching algorithm.

The encoding and interleaving is done more generally by a rate matching algorithm, such as the one used in the 3GPP-LTE standard (Third Generation Partnership Project-Long Term Evolution).

At least one sub vector of coded bits is provided to a discrete modulation input which may be a Quadrature Phase Shift Keying modulation or a 16, 32 or 64 Quadrature Amplitude Modulation in order to obtain at least one signal composed of complex modulation symbols obtained from the information bits.

The Source Src transfers one respective signal composed of complex modulation symbols obtained from the information bits on each of its antennas.

Each relay RL receives signal or signals and tries to decode information bits. Once the relay RL successfully decodes information bits, the relay RL may inform or not the source Src of the successful decoding and shifts to a transmission phase.

During the transmission phase, the source Src continues the transmission of the signals of complex modulation symbols obtained from the information bits which should be different from signals composed of complex modulation symbols transferred by the relay RL and which are obtained from the same information bits as the source Src.

Each relay obtains, from the information bits, one of the T sub vectors of coded bits for each of its antennas. Each relay RL may shift into the transmission phase at different time. The or each obtained sub vector is given to a discrete modulation input which may be a Quadrature Phase Shift Keying modulation or a 16, 32 or 64 Quadrature Amplitude Modulation in order to obtain at least one signal composed of complex modulation symbols obtained from the information bits.

The signal or signals composed of complex modulation symbols obtained from the information bits corresponds or correspond to redundancy generated by the rate matching algorithm.

The transmitted signals are transferred and the destination Dest knows how to decode the superimposed signals it receives from the source Src and/or other relays RL. If one of the transferred signals is not transferred at a given time, the destination Dest would replace the according coded bits by the value associated to punctured bits in the decoding of an error correcting code.

I f a Space-Time Block Code (STBC) is used in the wireless cellular telecommunication network, the source Src transfers one different signal through each of its antennas, the relay RL receives and tries to decode information bits transmitted by the source Src to the destination Dest.

The source Src transmits K information bits of an information word. Information bits are converted into coded bits by means of an encoder in order to form a vector of coded bits.

The vector of coded bits is given to a discrete modulation input which may be a Quadrature Phase Shift Keying modulation or a 16, 32 or 64 Quadrature Amplitude Modulation in order to obtain at least one signal composed of symbols obtained from the information bits.

The symbols are processed in order to form T different signals composed of complex modulation symbols obtained from the information bits.

The Source Src transfers one of the T signals obtained from the information bits on each of its antennas.

Each relay RL receives signal or signals and tries to decode information bits. Once the relay RL successfully decodes information bits, the relay RL may inform or not the source Src of the successful decoding and shifts to a transmission phase.

During the transmission phase, the source Src continues the transmission of signals which should be different from the signal or signals transferred by the relay RL.

Each relay RL obtains, from the information bits, one of the T signals for each of its antennas. Each relay may shift into the transmission phase at different time. The or each obtained signal composed of complex modulation symbols is transferred through a respective antenna of the relay RL.

In STBC, the time is divided into slots of U time slots. Each relay RL activates a transmission at the beginning of a slot of times slot.

It has to be noted here that U may or not be equal to T.

In a given slot of time slots, let call $fi(z_1,...,z_S)$ the symbols which are a combination of the S symbols $(z_1,..,z_S)$ which forms the i-th signal obtained from the information bits. For example, the source may use $f_1(z_1,..,z_S)=[z_1,..,z_S]$ in order to form the first signal composed of complex symbols obtained from the information bits.

It has to be noted here that U or T may or not be equal to S.

For example, let us consider a quasi-orthogonal STBC transmission scheme wherein four symbols $z_1$, $z_2$, $z_3$ and $z_4$ are transferred on one slot of four time slots.

That quasi-orthogonal STBC transmission scheme can be expressed as follows :

$$\begin{bmatrix} f_1(z_1,z_2,z_3,z_4) \\ f_2(z_1,z_2,z_3,z_4) \\ f_3(z_1,z_2,z_3,z_4) \\ f_4(z_1,z_2,z_3,z_4) \end{bmatrix} = \begin{bmatrix} z_1 & z_2 & z_3 & z_4 \\ -z_2^* & z_1^* & -z_4^* & z_3^* \\ -z_3^* & -z_4^* & z_1^* & z_2^* \\ z_4 & -z_3 & -z_2 & z_1 \end{bmatrix}$$

where * denotes the complex conjugate.

In that example U=T and U=S.

The transmission scheme is quasi-orthogonal, i.e. after classically applying the right rotation at the destination Dest, only the first and fourth signals are still interfering one on each other as well as the second and third signals. An interesting property of that transmission scheme is that the first and second rows correspond to two independent transmissions of orthogonal Alamouti Schemes, as well as the third and fourth rows.

In another example, the quasi-orthogonal STBC transmission scheme is modified as follows:

$$\begin{bmatrix} f_1(z_1,z_2,z_3,z_4) \\ f_2(z_1,z_2,z_3,z_4) \\ f_3(z_1,z_2,z_3,z_4) \\ f_4(z_1,z_2,z_3,z_4) \end{bmatrix} = \begin{bmatrix} z_1 & z_2 & z_3 & z_4 \\ -z_2^* & z_1^* & -z_4^* & z_3^* \\ z_1 & z_2 & -z_3 & -z_4 \\ -z_2^* & z_1^* & z_4^* & -z_3^* \end{bmatrix}.$$

The modified quasi-orthogonal STBC transmission scheme allows to consider a slot of two time slots instead of four, and gives more flexibility to the system.

In another example of STBC based transmission, if the number of time slots per slot is n and the number of antennas is n, one can use the following type of transmissions, according to full-rate full-diversity space-time block-code, as described in F. Oggier, G. Rekaya, J-C. Belfiore and E. Viterbo, "Perfect Space-Time Block Codes", IEEE Transactions on Information Theory, vol. 52, Issue 9, pp. 3885- 3902, September 2006.

$$
\begin{bmatrix} f_1(z_1,z_2,\cdots,z_n) \\ f_2(z_1,z_2,\cdots,z_n) \\ \vdots \\ f_n(z_1,z_2,\cdots,z_n) \end{bmatrix} = \begin{bmatrix} z_1 & z_2 & \cdots & z_{n-1} & z_n \\ \gamma\sigma(z_n) & \sigma(z_1) & \cdots & \sigma(z_{n-2}) & \sigma(z_{n-1}) \\ \gamma\sigma^2(z_{n-1}) & \gamma\sigma^2(z_n) & \cdots & \sigma^2(z_{n-3}) & \sigma^2(z_{n-2}) \\ \vdots & & & & \vdots \\ \gamma\sigma^{n-1}(z_2) & \gamma\sigma^{n-1}(z_3) & \cdots & \gamma\sigma^{n-1}(z_n) & \sigma^{n-1}(z_1) \end{bmatrix}
$$

where σ is the generator of the cyclic group associated to the number field extension | P/F, where F is the base field (e.g., $Q(i)$ is the field of rational number with $i^2 = -1$ or $Q(j)$ with $j^3 = 1$ ), and where P is a vector space of dimension n over F.

The variable $\gamma \in F$ allows to define a cyclic linear algebra $A = (P / F, \sigma, \gamma)$ with

$$
A = 1.P \oplus e \, .P \oplus e^2 .P \oplus \ldots \oplus e^{n-1}.P \text{ where } e^n = \gamma \, .
$$

For example, for n=4, we choose $F = Q(i)$, $P = Q(i, \cos(2\pi / 15))$ and $\gamma = i$.

In the wireless cellular telecommunication network, a Hybrid-ARQ (HARQ) feedback scheme is provided from the destination Dest to the source Src in order to acknowledge or not the success of former blocks transmissions.

In Hybrid-ARQ, a retransmission of redundancy is executed when the destination Dest is not able to successfully decode symbols, i.e. when the Cyclic redundancy Check embedded in the sent information word (CRC) fails.

As soon as sufficient coded bits are sent, the destination Dest can decode the message correctly and the transmission is stopped.

The destination Dest stores the concatenation of signals or of soft estimates of the coded bits received from the beginning of one information word transmission and applies a joint decoding on the concatenated symbols.

An acknowledgment is performed after a complex modulation symbols reception and decoding if the CRC check for the complex modulation symbols is correct.

Usually, each new complex modulation symbol comprises redundancy bits taken from the output of the rate matching algorithm and of the error correcting code.

It has to be noted here that the present invention is also applicable in open-loop transmissions like broadcasting where a codeword is segmented into several groups of complex modulation symbols.

At least one relay management entity ME may be included in the wireless cellular telecommunication network. A relay management entity ME may be a dedicated device or may be included in a core network device not shown in Fig. 1 or may be included in a base station BS.

According to the invention, once a relay RL successfully decodes information bits, the relay RL selects at least one signal among plural signals composed of complex symbols which can be obtained from the information bits and transfers the part of the or each selected signal which should be transferred from the time of the successful decoding.

A communication network not shown in Fig. 1, may link the base stations, the relay management entity ME and core network devices of the wireless cellular telecommunication network.

The communication network may be a DSL (Digital Subscriber Line) network, or an ISDN (Integrated Services Digital Network) network, etc.

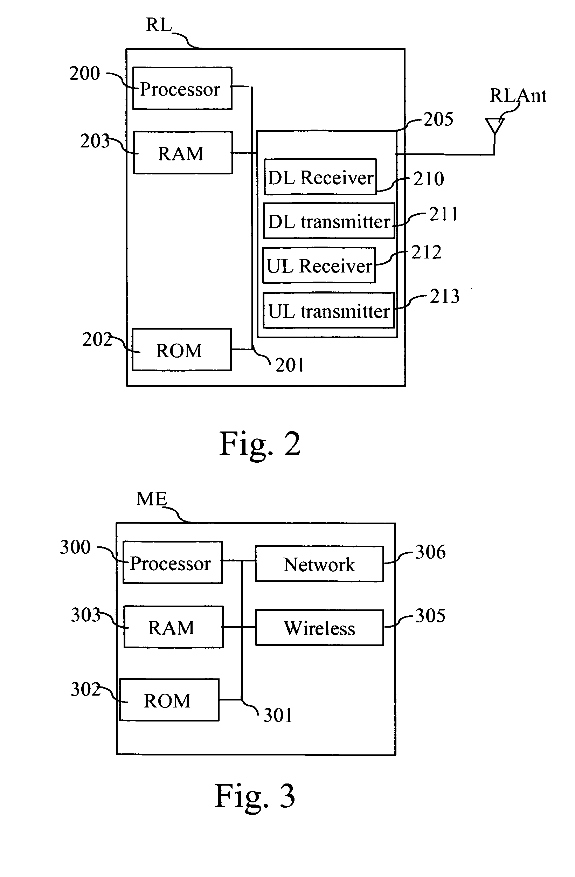

**Fig. 2** is a diagram representing the architecture of a relay in which the present invention is implemented.

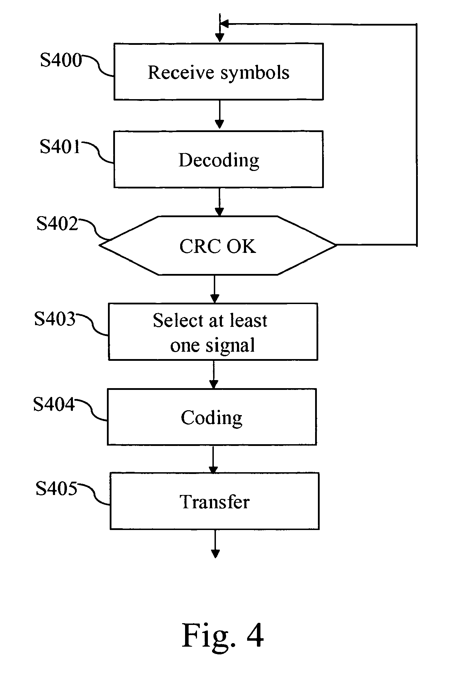

The relay RL has, for example, an architecture based on components connected together by a bus 201 and a processor 200 controlled by the programs as disclosed in the Fig. 4, 5 or 7.

The bus 201 links the processor 200 to a read only memory ROM 202, a random access memory RAM 203 and a wireless interface 205.

The memory 203 contains registers intended to receive variables and the instructions of the programs as disclosed in the Fig. 4, 5 or 7.

The processor 200 controls the operation of the wireless interface 205.

The read only memory 202 contains instructions of the programs as disclosed in the Fig. 4, 5 or 7, which are transferred, when the relay RL is powered on, to the random access memory 203.

The wireless interface 205 enables the relay RL to transfer and/or receive signals or messages to/from a base station or a home base station and to/from at least one mobile terminal.

The wireless interface 205 may comprise a downlink reception module 210 which receives signals transferred by at least one base station or by a home base station, may comprise a downlink transmission module 211 which transfers signals to at least one mobile terminal or to a home base station, may comprise an uplink reception module 212 which receives signals transferred by at least one mobile terminal or by a home base station and may comprise an uplink transmission module 213 which transfers signals to at least one base station or to a home base station.

**Fig. 3** is a diagram representing the architecture of a relay management entity in which the present invention is implemented.

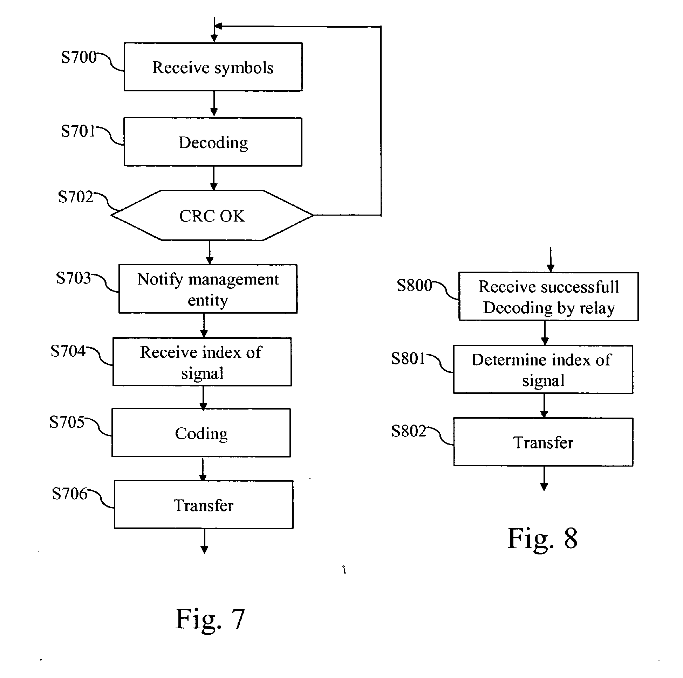

The relay management entity ME has, for example, an architecture based on components connected together by a bus 301 and a processor 300 controlled by the program as disclosed in the Fig. 8.

The bus 301 links the processor 300 to a read only memory ROM 302, a random access memory RAM 303, a network interface 306 and, if the relay management entity is comprised in a base station, a wireless interface 305.

The memory 303 contains registers intended to receive variables and the instructions of the program as disclosed in the Fig. 8.

The processor 300 controls the operation of the wireless interface 305 and the network interface 306.

The read only memory 302 contains instructions of the programs as disclosed in the Fig. 8, which are transferred, when the relay management entity ME is powered on, to the random access memory 303.

The wireless interface 305 enables the relay management entity ME to transfer and/or receive signals or messages to/from a relay.

The network interface 306 enables the relay management entity ME to transfer and/or receive signals or messages to/from a relay.

For example, the network interface 306 is a DSL (Digital Subscriber Line) modem, or an ISDN (Integrated Services Digital Network) interface, etc.

**Fig. 4** discloses an example of an algorithm executed by the relay according to a first mode of realisation of the present invention.

More precisely, the present algorithm is executed by the processor 200 of the each relay RL.

At step S400, the processor 200 detects the reception through the wireless interface 205 of at least one signal composed of complex modulation symbols obtained from information bits.

The at least one signal of complex modulation symbols obtained from information bits is received by the downlink receiver 210 or the uplink receiver 212 and is concatenated to the complex modulation symbols which have been previously received from the beginning of the transmission of one information word.

At next step S401, the processor 200 commands the wireless interface to decode at least the received signal composed of complex modulation symbols obtained from information bits and may include other complex modulation symbols previously received by the relay RL.

The complex modulation symbols are demodulated into soft-estimates of coded bits, de-interleaved and decoded into the information bits estimates.

At next step S402, the processor 200 checks if the CRC determined after the decoding of the at least one received signal composed of complex modulation symbols is correct.

If the CRC is correct, the processor 200 moves to step S403, otherwise, the processor 200 returns to step S400.

It has to be noted here that in a variant, if the CRC is correct, the processor 200 moves to step S403 and the processor 200 further checks if an acknowledgment message has been transferred by the destination Dest to the source Src for the last received vector of complex modulation symbols.

If an acknowledgment message has been transferred, the processor 200 returns to step S400, otherwise, the processor 200 moves to step S403.

At step S403, the processor 200 selects information identifying one signal among the plural signals.

For example, the processor 200 selects randomly information identifying one signal among the plural signals.

In another example, the processor 200 reads into the memory 203, information identifying one signal among the plural signals.

After that, the processor 200 commands at step S404 the wireless interface in order to code the selected signals.

Knowing the information bits, it is possible to derive the part of the selected signal that should be transferred from the successful decoding of the information bits, by using the rate matching algorithm, modulation and multiple antenna transmission scheme.

At next step S405, the processor 200 commands the transfer of the part of the selected signal which should be transferred from the time of the successful decoding.

The selected signal may be transferred in combination with at least one pilot symbol which identifies the selected signal. This allows for example the computing at the destination Dest of the receive power strength of each signal from the T signals that can possibly be sent by the source Src and/or at least one other relay.

If a signal is transmitted by a source Src and at least one relay RL or plural relays RL, the signal is perceived at the destination as a signal transferred by the source Src with a larger received power.

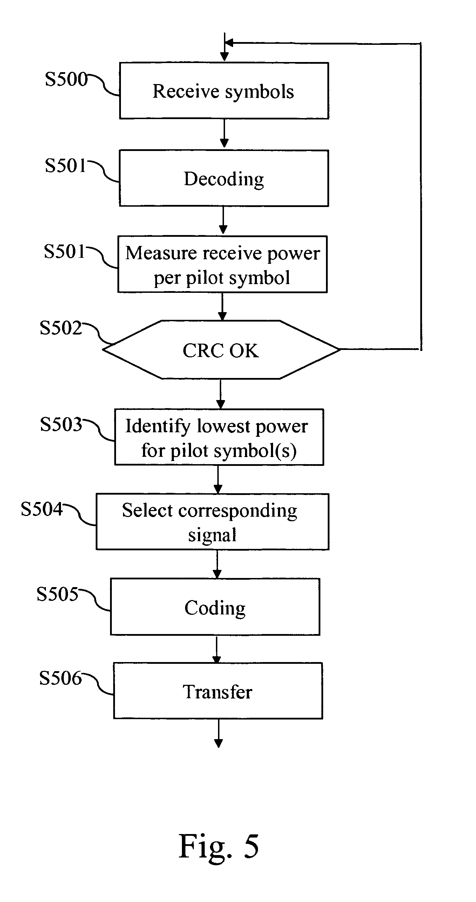

**Fig. 5** discloses an example of an algorithm executed by the relay according to a second mode of realisation of the present invention.

At step S500, the processor 200 detects the reception of at least one signal composed of complex modulation symbols obtained from information bits through the wireless interface 205.

The at least one signal of complex modulation symbols obtained from information bits is received by the downlink receiver 210 or the uplink receiver 212 and is concatenated to complex modulation symbols which have been previously received from the beginning of the transmission of one information word.

At next step S501, the processor 200 commands the wireless interface to decode at least the received signal composed of complex modulation symbols obtained from information bits and may include other complex modulation symbols previously received by the relay RL.

The complex modulation symbols obtained from information bits are demodulated into soft-estimates of coded bits, de-interleaved and decoded into the information bits estimates.

At next step S502, the processor 200 checks if the CRC determined after the decoding of the at least one received signal composed of complex modulation symbols obtained from information bits is correct.

If the CRC is correct, the processor 200 moves to step S503, otherwise, the processor 200 returns to step S500.

It has to be noted here that in a variant, if the CRC is correct, the processor 200 moves to step S503 and the processor 200 further checks if an acknowledgment message has been transferred by the destination Dest to the source Src for the last received complex modulation symbols.

If an acknowledgment message has been transferred, the processor 200 returns to step S500, otherwise, the processor 200 moves to step S503.

For example, in parallel to the step S500, the wireless interface 205 detects the pilot symbols reception power for each possible signal among the plural signals. At least one pilot symbol identifies uniquely one signal among the plural signals.

At next step S504, the processor 200 selects the signal for which the pilot symbols reception power is the lowest.

After that, the processor 200 commands at step S505 the wireless interface in order to code the selected signal.

Knowing the information bits, it is possible to derive the part of the selected signal that should be transferred from the successful decoding of the information bits.

At next step S506, the processor 200 commands the transfer of the part of the selected signal which should be transferred from the time of the successful decoding.

The selected signal may be transferred in combination with at least one pilot symbol which identifies the selected signal.

This allows for example the computing at the destination Dst of the receive power strength of each signal from the T signals that can possibly be sent by the source Src and/or at least one other relay.

If a signal is transmitted by a source Src and at least one relay RL or plural relays RL, the signal is perceived at the destination as a signal transferred by the source Src with a larger received power.

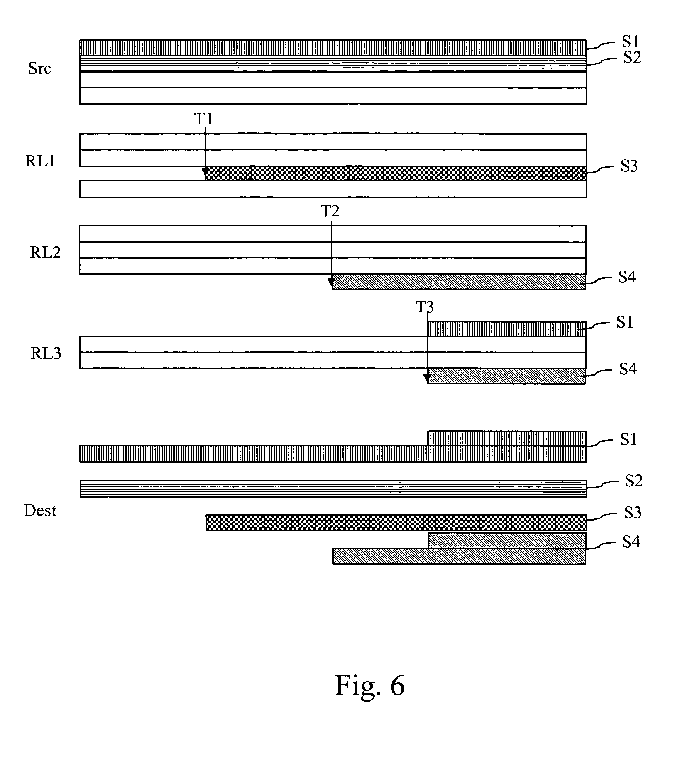

**Fig. 6** discloses an example of signals transferred between a source and a destination according to the present invention.

The Fig. 6 discloses an example wherein the source SRC has two transmit antennas, the relays RL1 and RL2 have a single transmit antenna, the relay RL3 has two transmit antennas.

The destination Dest may have one, two or four receive antennas.

For example, the following quasi-orthogonal STBC transmission scheme is used in the Fig. 6:

$$\begin{bmatrix} f_1(z_1,z_2,z_3,z_4) \\ f_2(z_1,z_2,z_3,z_4) \\ f_3(z_1,z_2,z_3,z_4) \\ f_4(z_1,z_2,z_3,z_4) \end{bmatrix} = \begin{bmatrix} z_1 & z_2 & z_3 & z_4 \\ -z_2^* & z_1^* & -z_4^* & z_3^* \\ -z_3^* & -z_4^* & z_1^* & z_2^* \\ z_4 & -z_3 & -z_2 & z_1 \end{bmatrix}$$

The source Src transmits two signals S1 and S2, each composed of complex modulation symbols obtained from information bits.

The source Src transmits K information bits of an information word. Information bits are converted into coded bits by means of an encoder in order to form a vector of coded bits.

The vector of coded bits is given to a discrete modulation input which may be a Quadrature Phase Shift Keying modulation or a 16, 32 or 64 Quadrature Amplitude Modulation in order to obtain at least one signal composed of symbols obtained from the information bits.

The symbols are processed in order to form 4 different signals composed of complex modulation symbols obtained from the information bits, and the different signals are segmented into slots of 4 time slots.

The source Src uses $f_1(z_1,z_2,z_3,z_4) =(z_1,z_2,z_1,z_4)$ for each slot of 4 time slots in order to form the first signal S1 composed of complex symbols obtained from the information bits. The signal S1 is transmitted on a first antenna along with pilot symbols associated to the signal S1. The signal S1 is represented by vertical hatchings.

The source Src uses $f_2(z_1,z_2,z_3,z_4)=(-z_2{}^*,z_1{}^*,-z_4{}^*,z_3{}^*)$ for each slot of 4 time slots in order to form the second signal S2 composed of complex symbols obtained from the information bits. The signal S2 is transmitted on the second antenna of the source Src along with pilot symbols associated to the signal S2. The signal S2 is represented by horizontal hatchings.

The relays RL1 to RL4 and the destination Dest receive the signals S1 and S2.

At time T1, the relay RL1 successfully decode the information bits from the signals S1 and S2.

The relay RL1 detects the pilot symbols reception power for each possible signals among the plural signals which are S1, S2, S3 and S4.

The relay RL1 selects for example the signal S3 for which the pilot symbol power is one of the lowest.

The relay RL1 derives from the decoded information bits, the signal S3 composed of complex symbols that should be transferred from the time T1 and transfers the part of the signal S3 which should be transferred from the time of the successful decoding T1 on the antenna of the relay RL1 along with pilot symbols associated to the signal S3 . The signal S3 is represented by checked figures.

From T1, the relays RL2 to RL4 and the destination Dest receive the signals S1, S2 and S3 sent by the source and the relay RL1.

At time T2, the relay RL2 successfully decodes the information bits from the signals S1, S2 and S3.

The relay RL2 detects the pilot symbols reception power for each possible signals among the plural signals which are S1, S2, S3 and S4.

The relay RL2 selects for example the signal S4 for which the pilot symbol is the lowest.

The relay RL2 derives from the decoded information bits, the signal S4 composed of complex symbols that should be transferred from the time T2 and transfers the part of the signal S4 which should be transferred from the time of the successful decoding T2 on the antenna of the relay RL2 along with pilot symbols associated to the signal S4. The signal S4 is represented by diagonal hatchings.

From T2, the relays RL3 and RL4 and the destination Dest receive the signals S1, S2, S3 and S4.

At time T3, the relay RL3 successfully decodes the information bits from the signals S1, S2, S3 and S4.

The relay RL3 detects the pilot symbols reception power for each possible signals among the plural signals which are S1, S2, S3 and S4.

The relay RL3 selects for example the signals S1 and S4 for which the pilot symbols are the lowest.

The relay RL3 derives from the decoded information bits, the signal S1 composed of complex symbols that should be transferred from the time T3 and transfers the part of the signal S1 which should be transferred from the time of the successful decoding T3 on the first antenna of the relay RL3 along with pilot symbols associated to the signal S1. The signal S1 is represented by vertical hatchings.

The relay RL3 derives from the decoded information bits, the signal S4 composed of complex symbols that should be transferred from the time T3 and transfers the part of the signal S4 which should be transferred from the time of the successful decoding T3 on the second antenna of the relay RL3 along with pilot symbols associated to the signal S4. The signal S4 is represented by horizontal hatchings.

From T3, the destination Dest receives the signal S1 transferred by the source Src and the relay RL3. The fact that the relay RL3 transfers the signal S1 in addition to the signal S1 transferred by the source SRC increases the receive power strength of S1 by the destination Dest.

From T2, the destination Dest receives the signal S4 transferred by the source Src and the relay RL3. The fact that the relay RL3 transfers the signal S4 in addition to the signal S4 transferred by the source SRC increases the receive power strength of S4 by the destination Dest.

The signals S1, S2, S3 and S4 bring diversity and enable a better decoding by the destination Dest.

**Fig. 7** discloses an example of an algorithm executed by the relay according to a third mode of realisation of the present invention.

At step S700, the processor 200 detects the reception of at least one signal composed of complex modulation symbols obtained from information bits through the wireless interface 205.

The at least one signal of complex modulation symbols obtained from information bits is received by the downlink receiver 210 or the uplink receiver 212 and is concatenated to complex modulation symbols which have been previously received from the beginning of the transmission of one information word.

At next step S701, the processor 200 commands the wireless interface to decode at least the received signal composed of complex modulation symbols obtained from information bits and may include other complex modulation symbols obtained from information bits and previously received by the relay RL.

The complex modulation symbols obtained from information bits are demodulated into soft-estimates of coded bits, de-interleaved and decoded into the information bits estimates.

At next step S702, the processor 200 checks if the CRC determined after the decoding of the at least one received signal composed of complex modulation symbols obtained from information bits is correct.

If the CRC is correct, the processor 200 moves to step S703, otherwise, the processor 200 returns to step S700.

It has to be noted here that in a variant, if the CRC is correct, the processor 200 moves to step S703 and the processor 200 further checks if an acknowledgment message has been transferred by the destination Dest to the source Src for the last received complex modulation symbols obtained from information bits.

If an acknowledgment message has been transferred, the processor 200 returns to step S700, otherwise, the processor 200 moves to step S703.

At step S703, the processor 200 commands the transfer to a relay management entity ME of a message notifying a successful decoding of the information bits.

If the relay management entity ME is a dedicated device or included in a core network device, the message is transferred to the source Src through the uplink transmitter 213 which forwards it to the relay management entity ME through the communication network.

If the relay management entity ME is included in a base station, the message is transferred to the source Src through the uplink transmitter 213.

At next step S704, the processor 200 receives, in response of the message transferred at step S703, information identifying the signal the relay RL has to transfer.

After that, the processor 200 commands at step S705 the wireless interface in order to code the identified signal.

Knowing the information bits, it is possible to derive the part of the identified signal that should be transferred from the successful decoding of the information bits.

At next step S706, the processor 200 commands the transfer of the part of the identified signal which should be transferred from the time of the successful decoding.

The selected signal may be transferred in combination with at least one pilot symbol which identifies the selected signal.

**Fig. 8** discloses an example of an algorithm executed by a relay management entity according to the third mode of realisation of the present invention.

More precisely, the processor 300 executes the present algorithm.

At step S800, the processor 300 detects the reception of a message notifying a successful decoding of information bits. The message is as the one disclosed at step S703 of Fig. 7.

At step S801, the processor 300 selects one information identifying one signal among the plural signals for each antenna of the relay RL which transferred the received message.

For example, the processor 300 reads into the memory 303, information identifying one signal that the relay RL which transferred the message should transfer.

In another example, the processor 300 selects information identifying one signal that the relay RL which transferred the message should transfer according to the previous messages received from the other relays in order to maximize for example the use of each signal.

At next step S802, the processor 300 commands the transfer, to the relay RL which sent the message received at step S800, of a response message comprising information identifying the selected signal.

Naturally, many modifications can be made to the embodiments of the invention described above without departing from the scope of the present invention.

**Claims**

1. Method for transferring, by a relay (RL1), at least one signal composed of complex symbols obtained from information bits retrieved from at least one source signal transferred by at least a source (Src) to a destination (Dest) in a wireless cellular telecommunication network, the source signal being composed of complex symbols obtained from said information bits, **characterised in that** the method comprises the steps executed by the relay of :

   - receiving at least one source signal (S1, S2) transferred by at least the source,
   - successfully decoding the information bits from the at least one received signal,
   - obtaining one signal (S3) among plural signals composed of complex symbols which can be obtained from the information bits,

- transferring the part of the obtained signal (S3) composed of complex symbols which can be obtained from the information bits, which should be transferred from the time (T1) of the successful decoding of the information bits, the complex symbols of the part of the obtained signal corresponding to redundancy generated by a rate matching algorithm.

2. Method according to claim 1, **characterised in that** the source transfers one source signal composed of complex symbols obtained from said information bits through each antenna of the source, each source signal transferred through an antenna of the source being different from each source signal transferred through another antenna of the source.

3. Method according to claim 1 or 2, **characterised in that** the relay obtains one signal among plural signals composed of complex symbols which can be obtained from the information bits for each of the antennas of the relay, each obtained signal transferred through an antenna of the relay being different from each obtained signal transferred through another antenna of the relay.

4. Method according to any of the claims 1 to 3, **characterised in that** one obtained signal is obtained by :

   - identifying one signal among plural signals composed of complex symbols which can be obtained from the information bits,
   - deriving from the decoded information bits, a part of the identified signal that should be transferred from the successful decoding of the information bits.

5. Method according to claim 4, **characterised in that** the identified signal is selected randomly from the plurality of signals composed of complex symbols which can be obtained from the information bits.

6. Method according to claim 4, **characterised in that** the identified signal is identified by reading at least one information stored into a memory.

7. Method according to claim 4, **characterised in that** the identified signals is identified by :

   - measuring the reception power of pilot symbols associated to for each possible signals among the plural signals,
   - identifying at least one signal for which the associated pilot symbol reception power is one of the lowest.

8. Method according to any of the claims 1 to 7, **characterised in that** a distributed Spatial Division Multiplexing transmission scheme is used in the wireless cellular telecommunication network.

9. Method according to any of the claims 1 to 7, **characterised in that** a space-time block code is used in the wireless cellular telecommunication network.

10. Relay (RL1) which is able to transfer at least one signal composed of complex symbols obtained from information bits retrieved from at least one source signal (S1, S2) transferred by at least a source (Src) to a destination (Dest) in a wireless cellular telecommunication network, the source signal being composed of complex symbols obtained from said information bits, **characterised in that** the relay comprises :

   - means for receiving at least one source signal (S1, S2) transferred by at least the source,
   - means for successfully decoding the information bits from the at least one received signal,
   - means for obtaining one signal (S3) among plural signals composed of complex symbols which can be obtained from the information bits,
   - means for transferring the part of the obtained signal (S3) composed of complex symbols which can be obtained from the information bits, which should be transferred from the time (T1) of the successful decoding of the information bits, the complex symbols of the part of the obtained signal corresponding to redundancy generated by a rate matching algorithm.


**Patentansprüche**

1. Verfahren zum Transferieren wenigstens eines Signals, das aus komplexen Symbolen zusammengesetzt ist, die aus Informationsbits erhalten sind, die aus wenigstens einem Quellensignal wiedergewonnen sind, das durch wenigstens eine Quelle (Src) zu einem Zielort (Dest) in einem drahtlosen zellularen Telekommunikationsnetzwerk transferiert ist, durch ein Relais (RL1), wobei das Quellensignal aus komplexen Symbolen zusammengesetzt ist, die aus den Informationsbits erhalten sind, **dadurch gekennzeichnet, dass** das Verfahren die durch das Relais ausgeführten folgenden Schritte aufweist:

- Empfangen wenigstens eines Quellensignals (S1, S2), das durch wenigstens die Quelle transferiert ist,
- erfolgreiches Decodieren der Informationsbits aus dem wenigstens einen empfangenen Signal,
- Erhalten eines Signals (S3) unter mehreren Signalen, die aus komplexen Symbolen zusammengesetzt sind, die aus den Informationsbits erhalten werden können,
- Transferieren des Teils des erhaltenen Signals (S3), das aus komplexen Symbolen zusammengesetzt ist, die aus den Informationsbits erhalten werden können, die ab der Zeit (T1) des erfolgreichen Decodierens der Informationsbits transferiert werden sollten, wobei die komplexen Symbole des Teils des erhaltenen Signals einer Redundanz entsprechen, die durch einen Ratenanpassungsalgorithmus erzeugt ist.

2. Verfahren nach Anspruch 1, **dadurch gekennzeichnet, dass** die Quelle ein Quellensignal, das aus komplexen Symbolen zusammengesetzt ist, die aus den Informationsbits erhalten sind, über eine jeweilige Antenne der Quelle transferiert, wobei jedes über eine Antenne der Quelle transferierte Quellensignal unterschiedlich von einem jeweiligen Quellensignal ist, das über eine andere Antenne der Quelle transferiert ist.

3. Verfahren nach Anspruch 1 oder 2, **dadurch gekennzeichnet, dass** das Relais ein Signal unter mehreren Signalen, die aus komplexen Symbolen zusammengesetzt sind, die aus den Informationsbits erhalten werden können, für eine jeweilige der Antennen des Relais erhält, wobei jedes erhaltene Signal, das über eine Antenne des Relais transferiert ist, unterschiedlich von einem jeweiligen erhaltenen Signal ist, das über eine andere Antenne des Relais transferiert ist.

4. Verfahren nach einem der Ansprüche 1 bis 3, **dadurch gekennzeichnet, dass** ein erhaltenes Signal erhalten wird durch:

- Identifizieren eines Signals unter mehreren Signalen, die aus komplexen Symbolen zusammengesetzt sind, die aus den Informationsbits erhalten werden können,
- aus den decodierten Informationsbits Ableiten eines Teils des identifizierten Signals, das transferiert werden sollte, aus dem erfolgreichen Decodieren der Informationsbits.

5. Verfahren nach Anspruch 4, **dadurch gekennzeichnet, dass** das identifizierte Signal aus der Vielzahl von Signalen, die aus komplexen Symbolen zusammengesetzt sind, die aus den Informationsbits erhalten werden können, zufällig ausgewählt wird.

6. Verfahren nach Anspruch 4, **dadurch gekennzeichnet, dass** das identifizierte Signal durch Lesen wenigstens einer Information, die in einen Speicher gespeichert ist, identifiziert wird.

7. Verfahren nach Anspruch 4, **dadurch gekennzeichnet, dass** das identifizierte Signal identifiziert wird durch:

- Messen der Empfangsleistung von zugehörigen Pilotsymbolen für jeweilige mögliche Signale unter den mehreren Signalen,
- Identifizieren wenigstens eines Signals, für welches die Empfangsleistung des zugehörigen Pilotsignals eine der niedrigsten ist.

8. Verfahren nach einem der Ansprüche 1 bis 7, **dadurch gekennzeichnet, dass** in dem drahtlosen zellularen Telekommunikationsnetzwerk ein verteiltes Raummultiplex-Übertragungsschema verwendet wird.

9. Verfahren nach einem der Ansprüche 1 bis 7, **dadurch gekennzeichnet, dass** in dem drahtlosen zellularen Telekommunikationsnetzwerk ein Raum-Zeit-Block-Code verwendet wird.

10. Relais (RL1), das wenigstens ein Signal, das aus komplexen Symbolen zusammengesetzt ist, die aus Informationsbits erhalten sind, die aus wenigstens einem Quellensignal (S1, S2) wiedergewonnen sind, das durch wenigstens eine Quelle (Src) zu einem Zielort (Dest) in einem drahtlosen zellularen Telekommunikationsnetzwerk transferiert ist, transferieren kann, wobei das Quellensignal aus komplexen Symbolen zusammengesetzt ist, die aus den Informationsbits erhalten sind, **dadurch gekennzeichnet, dass** das Relais folgendes aufweist:

- eine Einrichtung zum Empfangen wenigstens eines Quellensignals (S1, S2), das durch wenigstens die Quelle transferiert ist,
- eine Einrichtung zum erfolgreichen Decodieren der Informationsbits aus dem wenigstens einen empfangenen Signal,
- eine Einrichtung zum Erhalten eines Signals (S3) unter mehreren Signalen, die aus komplexen Symbolen zusammengesetzt sind, die aus den Informationsbits erhalten werden können,
- eine Einrichtung zum Transferieren des Teils des erhaltenen Signals (S3), das aus komplexen Symbolen zusammengesetzt ist, die aus den Informationsbits erhalten werden können, die ab der Zeit (T1) des erfolgreichen Decodierens der Informationsbits transferiert werden sollten, wobei die komplexen Symbole des Teils des erhaltenen Signals einer Redundanz entsprechen, die durch einen Ratenanpassungsalgorithmus erzeugt ist.

**Revendications**

1. Méthode pour transférer, par un relais (RL1), au moins un signal composé de symboles complexes obtenus à partir de bits d'information extraits d'au moins un signal source transféré par au moins une source (Src) à une destination (DEST) dans un réseau de télécommunication cellulaire sans fil, le signal de source se composant de symboles complexes obtenus à partir desdits bits d'information, **caractérisée en ce que** la méthode comporte les étapes exécutées par le relais de :

   - réception d'au moins un signal source (S1, S2) transféré par au moins la source,
   - décodage avec succès des bits d'information à partir du au moins un signal reçu,
   - obtention d'un signal (S3) parmi plusieurs signaux composés de symboles complexes qui peuvent être obtenus à partir des bits d'information,
   - transfert de la partie du signal obtenu (S3) composé de symboles complexes qui peuvent être obtenus à partir des bits d'information, qui devrait être transférée à partir de la période (T1) du décodage avec succès des bits d'information, les symboles complexes de la partie du signal obtenu correspondant à la redondance générée par un algorithme d'adaptation de rendement de codage.

2. Méthode selon la revendication 1, **caractérisée en ce que** la source transfère un signal source composé de symboles complexes obtenus à partir desdits bits d'information par l'intermédiaire de chaque antenne de la source, chaque signal source transféré par une antenne de la source étant différent de chaque signal de source transféré par une autre antenne de la source.

3. Méthode selon la revendication 1 ou 2, **caractérisée en ce que** le relais obtient un signal parmi les plusieurs signaux composés de symboles complexes qui peuvent être obtenus à partir des bits d'information pour chacune des antennes du relais, chaque signal obtenu transféré par une antenne du relais étant différent de chaque signal obtenu transféré par une autre antenne du relais.

4. Méthode selon l'une des revendications 1 à 3, **caractérisée en ce qu'**un signal est obtenu par :

   - identification d'un signal parmi plusieurs signaux composés de symboles complexes qui peuvent être obtenus à partir des bits d'information,
   - dérivation à partir des bits d'information décodés, d'une partie du signal identifié qui devrait être transféré à partir du décodage avec succès des bits d'information.

5. Méthode selon la revendication 4, **caractérisée en ce que** le signal identifié est choisi aléatoirement à partir de la pluralité de signaux composés de symboles complexes qui peuvent être obtenus à partir des bits d'information.

6. Méthode selon la revendication 4, **caractérisée en ce que** le signal identifié est identifié en lisant au moins une information stockée dans une mémoire.

7. Méthode selon la revendication 4, **caractérisée en ce que** le signal identifié est identifié par :

   - mesure de la puissance de réception de symboles pilotes associés pour chaque signal possible parmi la pluralité de signaux,
   - identification d'au moins un signal pour lequel la puissance de réception du symbole pilote associé est une des plus basses.

8. Méthode selon l'une des revendications 1 à 7, **caractérisée en ce que** un système de transmission à multiplexage spatial distribué est employé dans le réseau de télécommunication cellulaire sans fil.

9. Méthode selon l'une des revendications 1 à 7, **caractérisée en ce qu'**un code de bloc espace-temps est employé dans le réseau de télécommunication cellulaire sans fil.

10. Relais (RL1) qui peut transférer au moins un signal composé de symboles complexes obtenus à partir de bits d'information extraits d'au moins un signal source transféré par au moins une source (Src) à une destination (DEST) dans un réseau de télécommunication cellulaire sans fil, le signal de source se composant de symboles complexes obtenus à partir desdits bits d'information, **caractérisé en ce que** le relais comporte :

   - des moyens de réception d'au moins un signal source (S1, S2) transféré par au moins la source,
   - des moyens de décodage avec succès des bits d'information à partir du au moins un signal reçu,
   - des moyens d'obtention d'un signal (S3) parmi plusieurs signaux composés de symboles complexes qui peuvent être obtenus à partir des bits d'information,
   - des moyens de transfert de la partie du signal obtenu (S3) composé de symboles complexes qui peuvent être obtenus à partir des bits d'information, qui devrait être transférée à partir de la période (T1) du décodage avec succès des bits d'information, les symboles complexes de la partie du signal obtenu correspondant à la redondance générée par un algorithme d'adaptation de rendement de codage.

Src

Source

ME

Management
entity

RL2

Relay

RL3

Relay

RL4

Relay

RL1

Relay

Dest

Destination

# Fig. 1

RL

200 — Processor

RLAnt

— 205

203 — RAM

DL Receiver — 210

DL transmitter — 211

UL Receiver — 212

UL transmitter — 213

202 — ROM

201

# Fig. 2

ME

300 — Processor

Network — 306

303 — RAM

Wireless — 305

302 — ROM

301

# Fig. 3

Fig. 4

Fig. 5

Fig. 6

S700 — Receive symbols

S701 — Decoding

S702 — CRC OK

S703 — Notify management entity

S704 — Receive index of signal

S705 — Coding

S706 — Transfer

**Fig. 7**

S800 — Receive successfull Decoding by relay

S801 — Determine index of signal

S802 — Transfer

**Fig. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060239222 A

**Non-patent literature cited in the description**

- **F. Oggier ; G. Rekaya ; J-C. Belfiore ; E. Viterbo.** Perfect Space-Time Block Codes. *IEEE Transactions on Information Theory,* September 2006, vol. 52 (9), 3885-3902